# EUROPEAN PATENT APPLICATION

(11) **EP 1 821 551 A2**
(43) Date of publication of application: **22.08.2007**
(21) Application number: 07003226.3
(22) Date of filing: 15.02.2007
(51) Int. Cl.: H04N 9/64, H04N 9/78

(54) **Video processing device, video processing method, and video processing program**

(30) Priority: 16.02.2006 JP 2006038826
(71) Applicant: Pioneer Corporation, Tokyo 1538654 (JP)
(72) Inventor: Kai, Noriyuki, c/o Pioneer Corporation, Tokyo 143-8564 (JP); Hosoi, Kenichiro, c/o Pioneer Corporation, Tokyo 143-8564 (JP); Ochiai, Kazunori, c/o Pioneer Corporation, Tokyo 143-8564 (JP); Suzuki, Masahiro, c/o Pioneer Corporation, Tokyo 143-8564 (JP)
(74) Representative: Grünecker, Kinkeldey, Stockmair & Schwanhäusser Anwaltssozietät

(57) **Abstract**

Frame memories for delaying an input video signal for one frame respectively are connected in series. A dot interference detecting device detects variation between the input video signal and the delayed signals delayed for different frames of a pixel at the same position on a screen. When a dot interference is detected, a dot eliminating device eliminates the dot interference.

## Description

### Cross Reference to Related Applications

This application is on the basis of Japanese Patent Application No. 2006-038826, the contents of which are hereby incorporated by reference.

### Background of the Invention

### Field of the Invention

The present invention relates to a video processing device, a video processing method, and a video processing program for eliminating noise generated when a composite signal is converted to a component signal.

### Description of the related art

Video signal can be transmitted with a composite signal which is a composite of a brightness signal and a color signal, or with a component signal which transmits the brightness signal and the color signal separated from each other. Conventionally, since a frequency band of the transmission is narrow, the composite signal is used for conventional NTSC (National Television Standard Committee) television broadcasting. However, the component signal is used for DVD (Digital Versatile Disk) and digital broadcasting. Therefore, when a video source recorded in the composite signal is recorded in a DVD, or broadcasted in digital, the composite signal should be converted to the component signal.

If an accuracy of separating the brightness signal from the color signal when the composite signal is converted to the component signal, a noise called a dot interference, in which a component of the color signal remains in the brightness signal, or a cross color, in which the brightness signal remains in the color signal, is generated.

As a device for eliminating the dot interference and the cross color, for example, a device disclosed by Japanese Published Patent Application No. 2002-325262 (Patent Document 1) extracts a color subcarrier band with a band-pass filter, then filters in a time axis for detecting the dot interfering.

The device of the Patent Document 1 does not process in a pixel unit, so that there is a problem, for example, when a component signal converted from a conventional NTSC video size to another video size used for such as HDTV (High Definition Television) is inputted, it becomes much difficult to discriminate noise components such as the dot interference and the cross color.

Accordingly, an object of the present invention is to provide a video processing device and a video processing method for eliminating accurately the dot interference and the cross color from a component signal even changed its video size after being converted from a composite signal.

### Summery of the Invention

In order to attain the object, according to the present invention, there is provided a video processing device for eliminating a noise from a component signal which is attained by separating a brightness signal and a color signal from a composite signal, said video processing device including:
a noise detecting device for detecting a noise of a pixel based on a plurality of signals of the same pixel in component signals in different times; and
a noise eliminating device for eliminating the noise detected by the noise detecting device.

According to another aspect of the invention, there is provided a video processing method for eliminating a noise from a component signal which is attained by separating a brightness signal and a color signal from a composite signal,
said method including a step of detecting and eliminating a noise of a pixel based on a plurality of signals of the same pixel in component signals in different times.

According to another aspect of the invention, there is provided a video processing program for operating a computer of a video processing device for eliminating a noise from a component signal which is attained by separating a brightness signal and a color signal from a composite signal,
said program including the steps of detecting a noise of a pixel based on a plurality of signals of the same pixel in component signals in different times; and
eliminating the noise detected by the noise detecting step.

### Brief Description of the Drawings

Fig. 1 is a block diagram of a video processing device according to a first embodiment of the present invention;
Fig. 2 is a block diagram of a dot interference detecting device of the video processing device shown in Fig. 1;
Fig. 3 is an explanatory view of a change in a time direction corresponding to a specific pixel of a color subcarrier;
Fig. 4 is a block diagram of a dot interference eliminating device of the video processing device shown in Fig. 1;
Fig. 5 is a block diagram of the video processing device according to a second embodiment of the present invention;
Fig. 6 is a block diagram of the video processing device according to a third embodiment of the present invention;
Fig. 7 is a block diagram of a cross color detecting device of the video processing unit shown in Fig. 6;
Fig. 8 is a block diagram of the video processing device according to a fourth embodiment of the present invention;
Fig. 9 is a block diagram of a computer of the video processing device according to a fifth embodiment of the present invention;
Fig. 10 is a flow chart used for detecting and eliminating the dot interference of a video processing program running on the computer of the video processing device shown in Fig. 9; and
Fig. 11 is a flow chart used for detecting and eliminating the cross color of a video processing program running on the computer of the video processing device shown in Fig. 9.

### Detailed Description of the Preferred Embodiments

An embodiment of a video processing device according to the present invention will be explained. The video processing device detects a noise with a noise detecting device, and eliminates the noise with a noise eliminating device based on a plurality of signals of the same pixel in time-different component signals. Thus, the noise is detected from the same pixel in different times, namely, the noise is detected from time-dependent variation of the same pixel. Therefore, noise detection and elimination is not affected by a change of a pixel size.

A delaying device may be mounted for delaying the component signal for more than one frame. Thus, the noise detecting device can detect the noise based on the variation of the same pixel from a directly inputted component signal and the delayed component signal via the delaying device. Therefore, the noise detecting device can detect the noise from the same single pixel in different times.

The noise detecting device may detect a noise based on variations of the same pixel in a plurality of component signals delayed by the delaying device for different frame numbers. Thus, the noise detecting device detects the noise based on the variations of the plurality of component signals, and an accuracy of the noise detection is increased.

The noise detected by the detecting device and eliminated by the eliminating device may be a dot interference or a cross color. Eliminating these noises improves an image quality of the component signal converted from the composite signal.

The noise detecting device may detect the dot interference by only using a brightness signal of the component signal, and the noise eliminating device may eliminate the dot interference. Thus, the dot interference can be detected and eliminated only by the brightness signal, so that a scale of a circuit of the video processing device can be reduced.

The noise detecting device may detect the cross color by using both the brightness signal and a color signal of the component signal, and the noise eliminating device may eliminate the cross color. Thus, an accuracy of detecting the cross color is increased.

In a video processing method according to one embodiment of the present invention, based on the same pixel in a plurality of time-different component signals, the noise of the pixel is detected and deleted. Thus, because the noise is detected from the single pixel in different times, namely only a variation in a time direction, the noise is detected and eliminated without an affection of a variation of pixel sizes.

The noise may be detected based on a variation of the same pixel between the direct inputted component signal and the component signal delayed for at least one frame. Thus, the noise is detected based on the single pixel in different times.

A video processing program according to an one embodiment of the present invention has a noise detecting step for detecting a noise of a pixel based on a plurality of signals of the same pixel in time-different component signals, and a noise eliminating step for eliminating the noise detected at the noise detecting step. Thus, the noise is detected by the single pixel in different times, namely, by only a variation in a time direction, so that the noise is detected and eliminated without an affection of a variation of pixel sizes.

### First embodiment

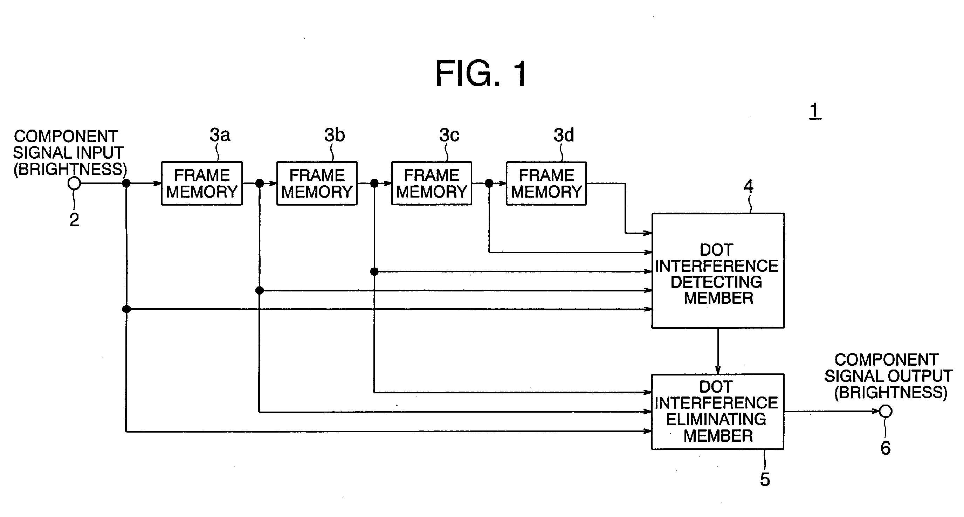

A video processing device 1 according to a first embodiment of the present invention will be explained with reference to Figs. 1 to 4. As shown in Fig. 1, the video processing device 1 includes a video input terminal 2, frame memories 3a, 3b, 3c, 3d, a dot interference detecting device 4, a dot interference eliminating device 5, and a video output terminal 6.

Only a brightness signal, which is one of a component signal previously separated to the brightness signal and a color signal from a composite signal, is inputted.

Frame memories 3a, 3b, 3c, 3d composed of a RAM, as delaying devices, respectively store a frame of the brightness signal of the component signal inputted from the video input terminal 2. The frame memories 3a, 3b, 3c, 3d are connected in series, and outputs of the frame memories 3a, 3b, 3c, 3d are inputted into the dot interference detecting device 4. Each of the frame memories 3a, 3b, 3c, 3d outputs the inputted brightness signal delayed for one frame. Further, the outputs of the frame memories 3a, 3b are inputted into the dot interference eliminating device 5. Namely, the brightness signals delayed for one to four frames by the frame memories 3a, 3b, 3c, 3d are inputted into the dot interference detecting device 4, and the brightness signals delayed for one to two frames are inputted into the dot interference eliminating device 5.

The dot interference detecting device 4 detects the dot interference as the noise to be eliminated from the brightness signal stored in the frame memories 3a, 3b, 3c, 3d and inputted from the video input terminal 2, and notifies the dot interference eliminating device 5.

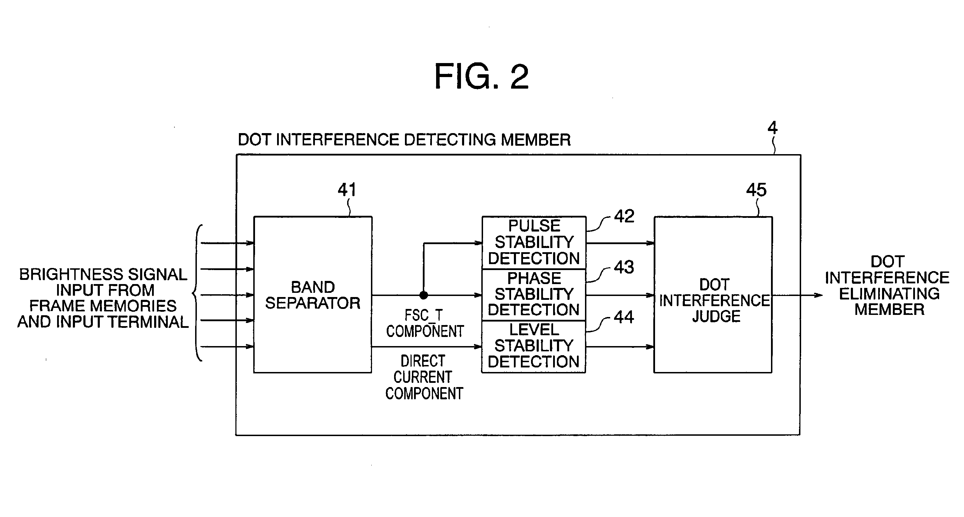

As shown in Fig. 2, the dot interference detecting device 4 includes a band separator 41, an amplitude stability detector 42, a phase stability detector 43, a level amplitude detector 44, and a dot interference judge 45.

The band separator 41 reads out a pixel at the same position from the video input terminal 2 and from the frame memories 3a, 3b, 3c, 3d. Then, the band separator 41 separates a frequency component of a time variation sc_t of a specific pixel in a reference signal of a color subcarrier, and a direct current component of the inputted brightness signal.

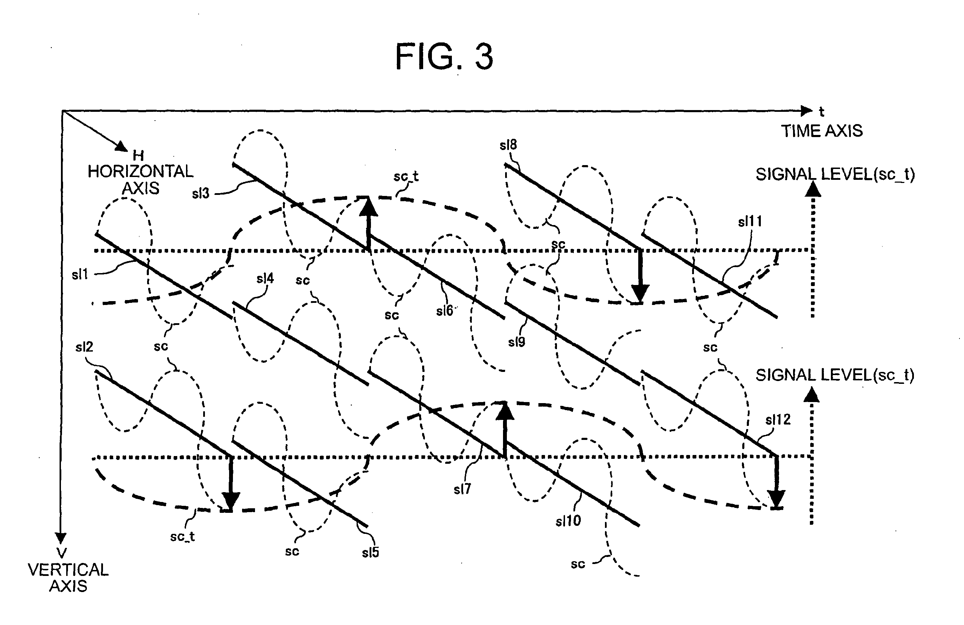

The time variation sc_t of the specific pixel in the reference signal of the color subcarrier will be explained with reference to Fig. 3. Fig. 3 is composed of a horizontal axis H, a vertical axis V, and a time axis t. In Fig. 3, scanning lines sl1 to sl12 are parallel to the horizontal axis H, perpendicular to the vertical axis V, and arranged in a field unit to the time axis t. Here, sl1 and sl12; sl3, sl4, and sl5; sl6 and sl7; sl8, sl9, and sl10; sl11 and sl12; are respectively in the same fields. Phases of the color subcarrier are inverted in the scanning lines next to each other in the vertical direction V and the time direction t (for example, sl1 and sl2, sl3 and sl8). Here, for example, sl3 and sl8 are the scanning lines in the same position in the different times on a screen. Therefore, a right end of the scanning line sl3 and a right end of the scanning line sl8 are the pixels at the same position in the different times. A waveform made by connecting the reference signals sc of the color subcarrier at the two pixels is the time variation sc_t of the specific pixel in the reference signal of the color subcarrier. Namely, the time variation sc_t indicates a signal variation at the same pixel of the different frames (component signals).

Because the brightness signal is separated from the color signal, an amplitude variation in a frequency component (fsc_t) of the time variation sc_t of the specific pixel in the reference signal of the color subcarrier is naturally small. However, when the variation of the amplitude is more than a specific value, it can be said that this is a remained color signal component when the color signal is separated from the brightness signal, namely, the dot interference component. Namely, presence of the dot interference can be judged by separating the frequency component (fsc_t) of the time variation sc_t of the specific pixel in the reference signal of the color subcarrier, and detecting the variation of such as the amplitude.

The amplitude stability detector 42 judges whether the amplitude of the fsc_t component separated by the band separator 41 is more than a predetermined value or not. If the amplitude is more than the predetermined value, the amplitude stability detector 42 notifies the dot interference judge 45.

The phase stability detector 43 judges whether the variation of the phase of the fsc_t component separated by the band separator 41 is more than a predetermined value or not. If the variation is not more than the predetermined value, the phase stability detector 43 notifies the dot interference judge 45.

The level amplitude detector 44 judges whether a variation of a level of the direct current component separated by the band separator 41 is more than a predetermined value or not. If the variation is not more than the predetermined value, the level amplitude detector 44 notifies the dot interference judge 45.

The dot interference judge 45 outputs a dot interference detecting signal as the dot interference is detected when all of the amplitude stability detector 42, the phase stability detector 43, and the level amplitude detector 44 notify the dot interference judge 45.

The dot interference eliminating device 5 eliminates the dot interference from the brightness signal inputted from the video input terminal 2 and the frame memories 3a, 3b and outputs to the video output terminal 6 based on the detecting signal from the dot interference detecting device 4.

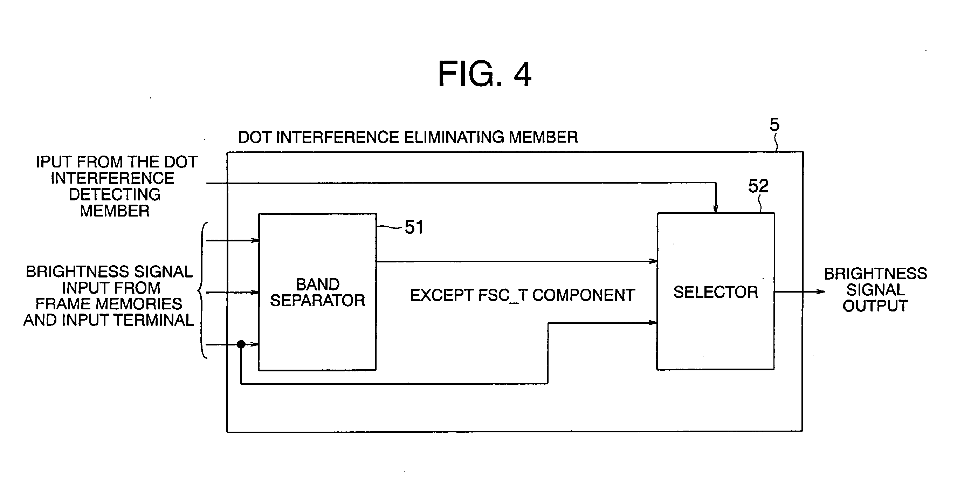

As shown in Fig. 4, the dot interference eliminating device 5 includes a band separator 51 and a selector 52.

The band separator 51 outputs a band made by subtracting the fsc_t component, namely, the dot interference component from the brightness signal inputted from the video input terminal 2 and the frame memories 3a, 3b. To be more precise, the band separator 51 outputs an average of them of the pixel at the same position on the screen read out from the video input terminal 2 and the frame memories 3a, 3b.

The selector 52 outputs the input from the band separator 51 when the dot interference detecting signal is inputted from the dot interference detecting device 4, and outputs the input from the video input terminal 2 when the dot interference detecting signal is not inputted from the dot interference detecting device 4.

Next, an operation of the video processing device 1 according to the present invention will be explained. The video input terminal 2 inputs the brightness signal which is one component of the component signal converted from the composite signal to the video processing device 1. The brightness signal inputted from the video input terminal 2 is stored in the frame memory 3a, and inputted to the dot interference detecting device 4 and the dot interference eliminating device 5. When the next frame is inputted to the frame memory 3a, the brightness signal in one frame stored in the frame memory 3a is outputted to the frame memory 3b, the dot interference detecting device 4, and the dot interference eliminating device 5. When the next frame is inputted to the frame memory 3b, the brightness signal in one frame stored in the frame memory 3b is outputted to the frame memory 3c, the dot interference detecting device 4, and the dot interference eliminating device 5. When the next frame is inputted to the frame memory 3c, the brightness signal in one frame stored in the frame memory 3c is outputted to the frame memory 3d, and the dot interference detecting device 4. When the next frame is inputted to the frame memory 3d, the brightness signal in one frame stored in the frame memory 3d is outputted to the dot interference detecting device 4. Thus, the frame memory 3a, 3b, 3c, 3d respectively output the brightness signal delayed for one, two, three, and four frames to the dot interference detecting device 4.

Then, the dot interference detecting device 4 reads out the brightness signals of the pixel at the same position on the screen, which are delayed for different frames, and inputted from the video input terminal 2 and the frame memories 3a, 3b, 3c, 3d. When the dot interference is detected, the dot interference detecting device 4 outputs the dot interference detecting signal to the dot interference eliminating device 5. When the dot interference detecting signal is inputted from the dot interference detecting device 4, the dot interference eliminating device 5 eliminates the dot interference based on the brightness signals inputted from the video input terminal 2, and the frame memories 3a, 3b, 3c, 3d, and outputs from the video output terminal 6.

According to the first embodiment, the dot interference is detected and eliminated by a time variation of the signal of the pixel at the same position on the screen in a plurality of frames having different times, by delaying for several frames with the frame memories, using only brightness signals of the inputted component signals. Namely, the dot interference is detected and eliminated by the single pixel in the time axis direction, so that when the image size is changed after the component signal is converted, the accuracy of detection and elimination of the dot interference does not become low.

Incidentally, in the first embodiment, the signals inputted into the dot interference eliminating device 5 are the signals from the video input terminal 2 and the frame memories 3a, 3b. However, the signals from the frame memories 3c, 3d may be inputted. Namely, a plurality of signals for eliminating the dot interference is necessary.

### Second embodiment

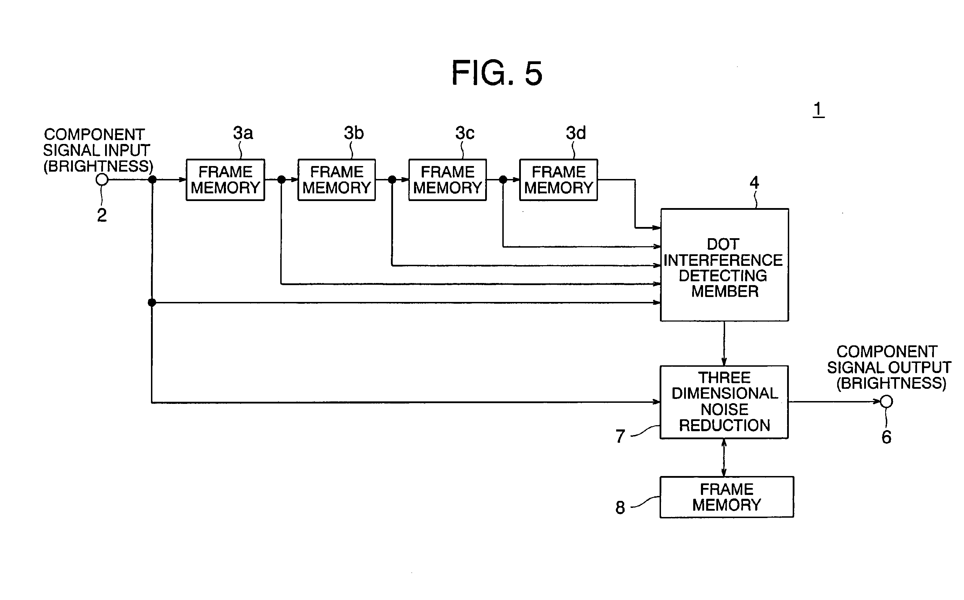

Next, the video processing device 1 according to the second embodiment of the present invention will be explained with reference to Fig. 5.

As shown in Fig. 5, in the video processing device 1 of the second embodiment, as similar to the first embodiment, the frame memories 3a, 3b, 3c, 3d are connected in series, and the outputs of them are inputted into the dot interference detecting device 4 so as to detect the dot interference. However, instead of the dot interference eliminating device 5, a three dimensional noise reduction 7 is used for eliminating the dot interference.

The three dimensional noise reduction 7 is a noise eliminating device by detecting a time variation of the screen, and judges a still image when the time variation is small, and judges a motion image when the time variation is large. A frame memory 8 is a video data memory for the three dimensional noise reduction 7 to eliminate a noise except the dot interference, and composed of a RAM.

When the three dimensional noise reduction 7 is solely used, the three dimensional noise reduction 7 strengthens an effect of eliminating the noise when judging the image is a still image, and weaken the effect of eliminating the noise when judging the image is a motion image. Normally, the three dimensional noise reduction 7 eliminates a noise by averaging the pixel of the frames. Therefore, when the image is rapidly changed (a variation between frames is large), blurring or tailing may be happened on the screen, so that the effect of the three dimensional noise reduction 7 is often reduced.

However, when the noise is the dot interference, due to the dot interference component, the three dimensional noise reduction 7 may misunderstand that the image is a motion image even the inputted image is a still image. In this case, the noise reduction is not enough.

In the second embodiment, the video processing device 1 detects the dot interference as similar to the first embodiment. The three dimensional noise reduction 7 eliminates the noise. Namely, when the dot interference detecting device 4 detects the dot interference, the dot interference detecting device 4 outputs a signal so that the three dimensional noise reduction 7 strengthen the effect of eliminating the noise. When the dot interference detecting device 4 does not detect the dot interference, the three dimensional noise reduction 7 works as the conventional three dimensional noise reduction 7.

According to the second embodiment, the dot interference is detected by the time variation of the brightness signals of the inputted component signals of the pixel at the same position on the screen in the frames at the different times delayed for several frames with the frame memories. The three dimensional noise reduction 7 eliminates the dot interference. Therefore, the video processing device 1 can eliminate the dot interference which is difficult for conventional three dimensional noise reduction 7 to eliminate. Further, the dot interference is detected and eliminated with the single pixel in the time axis direction, the accuracy of detecting and eliminating the dot interference is not reduced even when the image size is changed after converted to the component signal. Further, because using the three dimensional noise reduction 7, noises except the dot interference can be eliminated, so that flexibility of the video processing device 1 is improved in comparison to the video processing device 1 of the first embodiment.

### Third embodiment

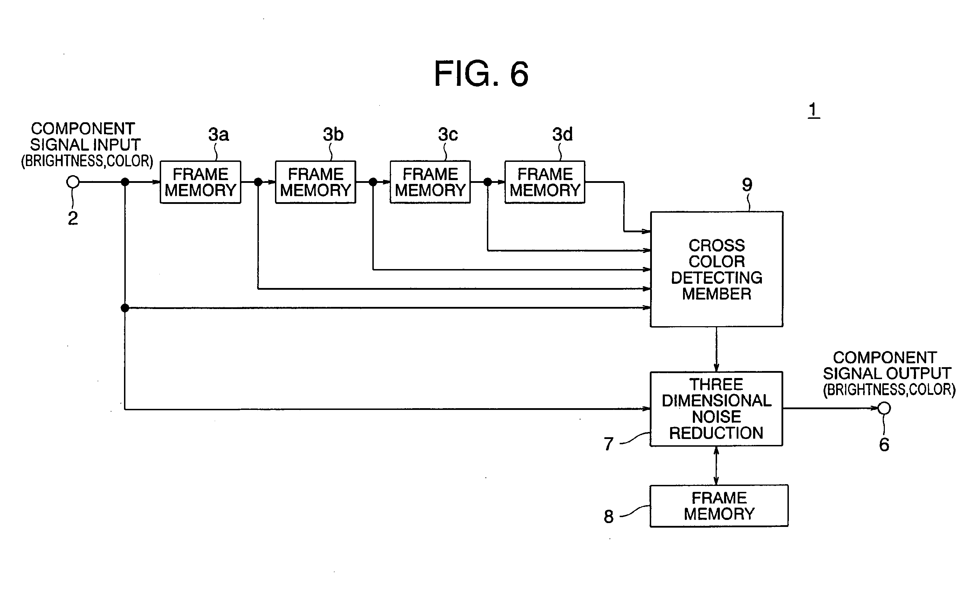

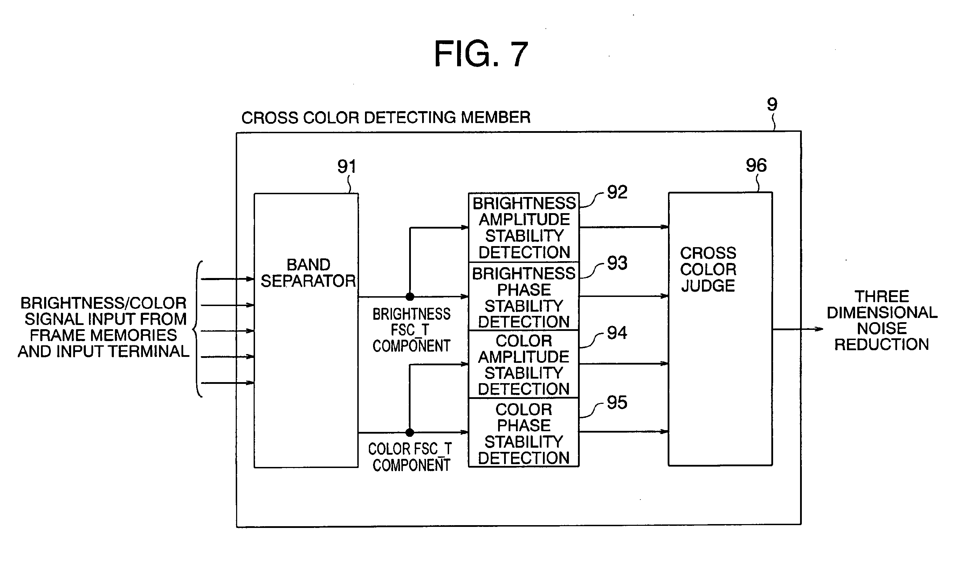

Next, the video processing device 1 according to a third embodiment of the present invention will be explained with reference to Figs. 6 and 7.

As shown in Fig. 6, the video processing device 1 of the third embodiment is different from the video processing device 1 of the second embodiment in a point that the color signal is also inputted from the video input terminal 2 with the brightness signal, and the dot interference detecting device 4 is changed to a cross color detecting device 9. Namely, this video processing device 1 of the third embodiment detects and eliminates the cross color.

As shown in Fig. 7, the cross color detecting device 9 includes a band separator 91, a brightness amplitude stability detector 92, a brightness phase amplitude detector 93, a color amplitude stability detector 94, a color phase stability detector 95, and a cross color judge 96.

The band separator 91 reads out a pixel at the same position on the screen from each frame memory. Then, the band separator 91 separates frequency components of a time variation sc_t of a specific pixel in a reference signal of a color subcarrier with respect to both the brightness signal and the color signal.

The brightness amplitude stability detector 92 judges whether the amplitude of the fsc_t component with respect to the brightness signal separated by the band separator 91 is more than a predetermined value or not. If the amplitude is not more than the predetermined value, the brightness amplitude stability detector 92 notifies the cross color judge 96.

The brightness phase amplitude detector 93 judges whether the variation of the phase of the fsc_t component with respect to the brightness signal separated by the band separator 91 is more than a predetermined value or not. If the variation is more than the predetermined value, the brightness phase amplitude detector 93 notifies the cross color judge 96.

The color amplitude stability detector 94 judges whether the amplitude of the fsc_t component with respect to the color signal separated by the band separator 91 is more than a predetermined value or not. If the variation is more than the predetermined value, the color amplitude stability detector 94 notifies the cross color judge 96.

The color phase stability detector 95 judges whether the variation of the phase of the fsc_t component with respect to the color signal separated by the band separator 91 is more than a predetermined value or not. If the variation is more than the predetermined value, the color phase stability detector 95 notifies the cross color judge 96.

The cross color judge 96 outputs a cross color detecting signal to the three dimensional noise reduction 7 as the cross color is detected when all of the brightness amplitude stability detector 92, the brightness phase amplitude detector 93, and the color amplitude stability detector 94 notify the cross color judge 96.

Namely, from results of the brightness amplitude stability detector 92, the brightness phase amplitude detector 93, the color amplitude stability detector 94, and the color phase stability detector 95, when the variation of the pixel of the brightness signal is small, and the variation of the pixel of the color signal is large, it is judged that the signal is the cross color.

In the case of cross color, the three dimensional noise reduction 7 may also misunderstand the inputted still image as the motion image owing to the cross color component. In this case, the noise is not enough eliminated.

In the third embodiment, the cross color detecting device 9 detects the cross color, but the three dimensional noise reduction 7 eliminates the cross color as similar to the second embodiment. Namely, when the cross color detecting device 9 detects the cross color, the cross color detecting device 9 outputs a signal to the three dimensional noise reduction 7 so as to strengthen the effect of the noise reduction. When the cross color is not detected, the three dimensional noise reduction 7 works as the conventional three dimensional noise reduction.

According to the third embodiment, the cross color is detected by the time variation of the pixel at the same position on the screen in time-different frames delayed for several frames by the frame memories with respect to both the brightness signals and the color signals of the inputted component signals, and eliminated by the three dimensional noise reduction. Therefore, the cross color, which conventionally is difficult to be eliminated by the three dimensional noise reduction, can be eliminated. Further, because the cross color is detected and eliminated with the single pixel in only the time axis direction, even when the image size is changed after the component signal is converted, the accuracy of detecting and eliminating the cross color is not worse. Further, because using the three dimensional noise reduction, noises except the cross color can be eliminated, so that the flexibility of the video processing device is improved.

### Fourth embodiment

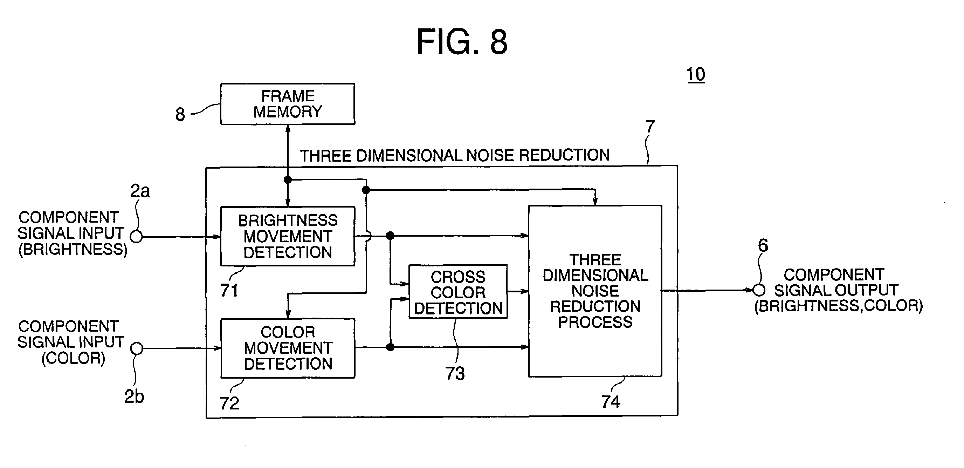

A video processing device 10 according to a fourth embodiment of the present invention will be explained with reference to Fig. 8.

As shown in Fig. 8, the video processing device 10 can detect and eliminate the cross color by adding functions with the three dimensional noise reduction circuit, and includes a three dimensional noise reduction 7' and a frame memory 8.

The three dimensional noise reduction 7' includes a brightness motion detector 71, a color motion detector 72, a cross color detector 73, and a three dimensional noise reduction processor 74.

The brightness motion detector 71 detects a motion of the brightness signal based on a brightness signal inputted from a component brightness signal input terminal 2a and a brightness signal delayed for a frame stored in the frame memory 8, and outputs the detected signal to the cross color detector 73 and the three dimensional noise reduction processor 74. The brightness motion detector 71 also outputs the brightness signal inputted from the component brightness signal input terminal 2a to the three dimensional noise reduction processor 74 and the frame memory 8.

The color motion detector 72 detects a motion of the color signal based on a color signal inputted from a component color signal input terminal 2b and a color signal delayed for a frame stored in the frame memory 8, and outputs the detected signal to the cross color detector 73 and the three dimensional noise reduction processor 74. The color motion detector 72 also outputs the color signal inputted from the component color signal input terminal 2b to the three dimensional noise reduction processor 74 and the frame memory 8.

Motion detecting signals are inputted to the cross color detector 73 from the brightness motion detector 71 and the color motion detector 72. When a motion is not detected from the brightness signal, and the motion is detected from the color signal, the cross color detector 73 strengthens the effect of eliminating noise of the three dimensional noise reduction processor 74.

The three dimensional noise reduction processor 74 as a noise eliminating device eliminates noises of the inputted brightness signal and color signal corresponding to the detecting signals from the brightness motion detector 71, the color motion detector 72, and the cross color detector 73.

The frame memory 8 as a delaying device stores one frame of the brightness and color signals inputted from the component brightness signal input terminal 2a and the component color signal input terminal 2b.

According to the fourth embodiment, the cross color detector 73 is added to the conventional three dimensional noise reduction circuit, so that the cross color can be detected and eliminated with a small change of the video processing device. Further, because the cross color is detected and eliminated with the single pixel in only the time axis direction, the accuracy of detecting and eliminating the cross color is not worse even when the image size is changed after converting to the component signal.

Incidentally, in the fourth embodiment, the cross color is eliminated. However, by replacing the cross color detector 73 with a circuit for detecting the dot interference, it is possible to detect the dot interference.

Further, in the fourth embodiment, the frame memory 8 stores one frame of video. However, if the frame memory 8 stores a plurality of frames of video, the accuracy of deleting the cross color is improved because the number of pixels in different times are increased.

### Fifth embodiment

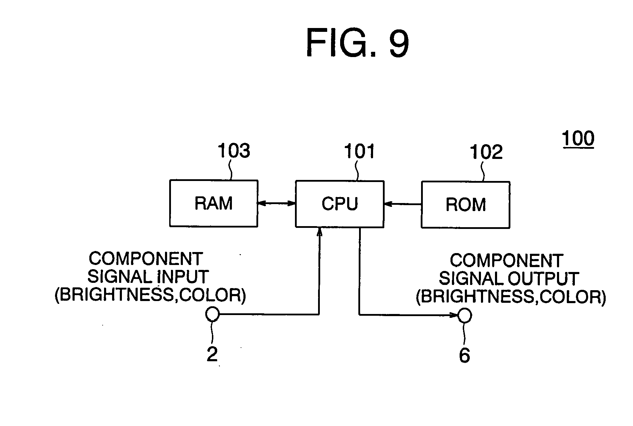

Next, a video processing program according to a fifth embodiment of the present invention will be explained with reference to Figs. 9 to 11.

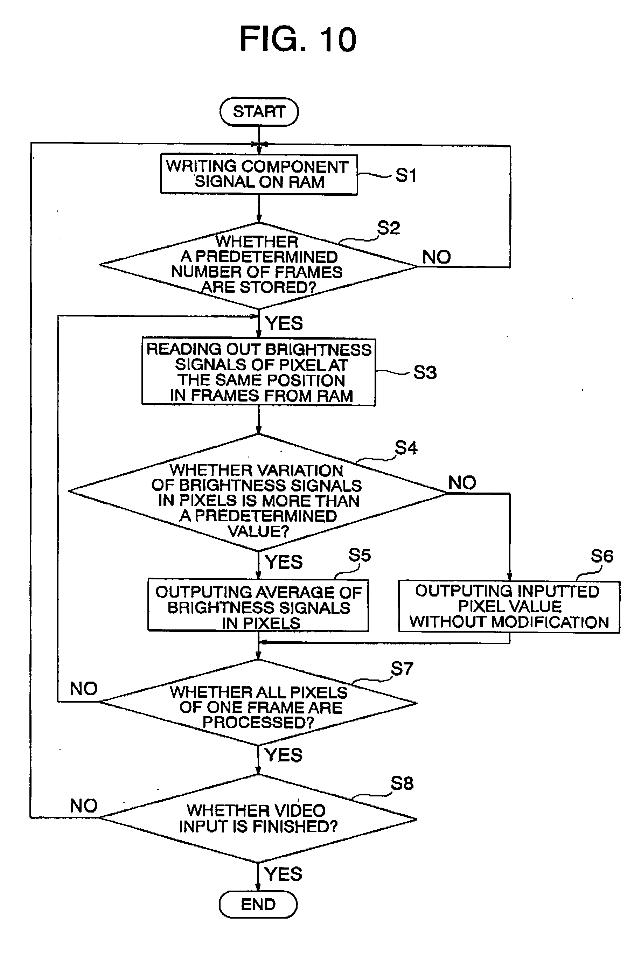

The first to fourth embodiments are structured by hardware. The fifth embodiment is a program to be run by a computer. Fig. 9 shows a block diagram of the computer. Fig. 10 shows a flow chart when eliminating the dot interference.

In a computer 100 for a video processing device, the component signal inputted from the video input terminal 2 is written on a RAM 103 as a delaying device. A noise such as the dot interference is eliminated by running a video processing program stored in a ROM 102 with a CPU 101 as a noise detecting and eliminating device. A noise-eliminated video is outputted from a video output terminal 6.

A dot eliminating operation according to the fifth embodiment will be explained with reference to Fig. 10.

First, in step S1, a component signal inputted from the video input terminal 2 is written on the RAM 103.

Next, in step S2, whether a predetermined number, memorized in the ROM 102, of frames of the video signals written on the RAM 103 are stored or not is judged. If the predetermined number of frames of the video signals are stored ("YES" in step S2), the program goes to step S3, else ("NO" in step S2) the program goes to step S1.

Next, in step S3, brightness data of a pixel at the same position on the screen in each frame written on the RAM 103 is read out. Namely, signals on the same pixel in different times are read out.

Next, in step S4 as a noise detecting step, if a variation of the brightness signals at respective pixels is more than a specific value memorized in the ROM 102 ("YES" in step S4), the CPU 101 judges that the signal is the dot interference, and the program goes to step S5, else ("NO" in step S6) the program goes to step S6.

Next, in step S5 as a noise eliminating step, a pixel value in which the dot interference is eliminated is made by averaging the brightness signals of the respective pixels, and outputted from the video output terminal 6. Then, the program goes to step S7.

In step S6, because the dot interference is not detected, an inputted video (pixel value) is directly outputted from the video output terminal 6, and the program goes to step S7.

Next, in step S7, whether all the pixels of one frame are processed in step S5 or S6 or not is judged. If the pixels are processed ("YES" in step S7), the program goes to step S8, else ("NO" in step S7) the program goes to step S3.

Next, in step S8, whether the video input signal is ended or not is judged. If the video input signal is ended ("YES" in step S8), the program is ended, else ("NO" in step S8), the program goes to step S1.

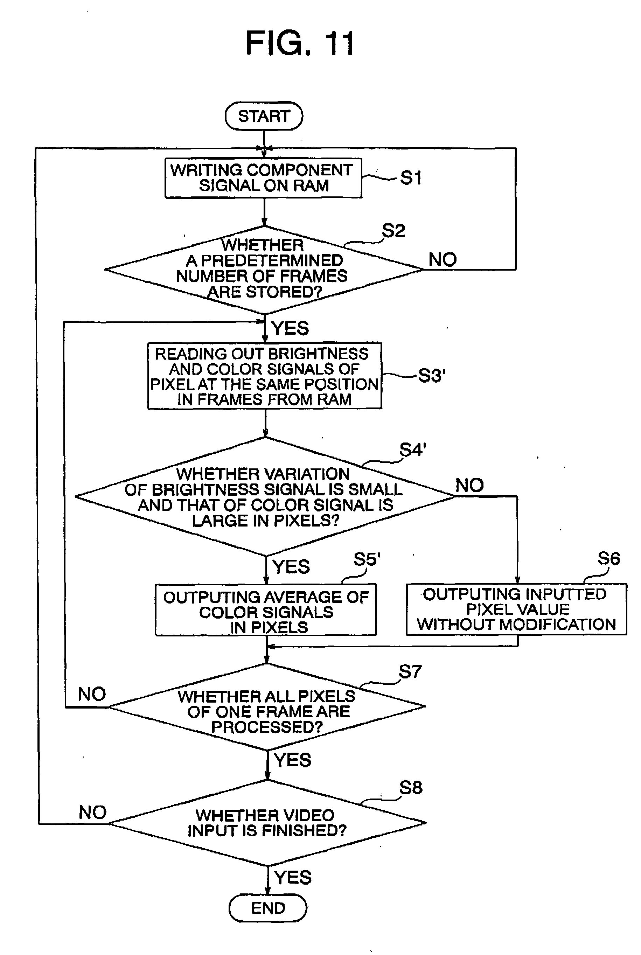

Next, an operation of eliminating the cross color will be explained with reference to Fig. 11.

Basically, the flow chart of the cross color is the same as that of the dot interference. The differences are, step S3 to step S3'; step S4 to step S4'; and step S5 to step S5'.

In step S3', the brightness and color signals of the pixel at the same position on the screen in each frame stored in the RAM 103 are read out. Namely, the signals at the same pixel in different times are read out.

In step S4' as a noise detecting step, if variations of the brightness signals at each pixel are less than a predetermined value previously stored in the ROM 102, and the color signals are more than a predetermined value previously stored in the ROM 102 ("YES" in step S3'), the signals are judged as the cross color, and the program goes to step S5', else ("NO" in step S3') the program goes to step S6.

In step S5' as a noise eliminating step, the program calculates an average of the color signals of the read out pixels, and then outputs the average to eliminate the cross color to the video output terminal 6, and the program goes to step S7.

According to the fifth invention, the video processing of the first to fourth embodiments is done by software, so that a specific hardware is not necessary, and the flexibility is improved. Further, if mixing the dot interference and the cross color flow charts, the software can eliminate both the dot interference and the cross color, so that the flexibility is further improved. Alternatively, one of the dot interference and the cross color may be done by software, and the other may be done by hardware.

Incidentally, according to the present invention, because the noise is detected from a variation of the single pixel in the plurality of frames, the still image is the best inputted image to be detected and eliminated the noise accurately. However, even movie images, partially still image such as a subtitle is applicable.

The device for eliminating the dot interference described in the first and second embodiments may be combined with the device for eliminating the cross color described in the third and fourth embodiments. For example, when combining the second and the third embodiments, the frame memory and the three dimensional noise reduction are common, and the dot interference detector and the cross color detector may be mounted. In this case, both the dot interference and the cross color may be detected and eliminated.

Further, if the cross color component is included in the component signal, the cross color component may be leaked to the brightness signal, so that the dot interference may be detected, and vice versa (dot interference is detected at the cross color detection). Therefore, when both the dot interference and the cross color can be detected and eliminated, and one of the dot interference and the cross color is detected, both the dot interference and the cross color may be eliminated. Further, if only one of the dot interference and the cross color can be detected, and a noise eliminating device for eliminating both the dot interference and the cross color such as the three dimensional noise reduction is mounted, when the one of the dot interference and the cross color is detected, both the dot interference and the cross color may be eliminated. Thus, a high effect of eliminating the noise can be expected.

Further, according to the embodiments described above, a frame memory is used, however, a field memory may be used. The number of the frame or the field memories is not limited to four as described in the embodiments.

Further, in the embodiments described above, the frame memory is used as a delaying device. However, any device, which can detect a variation of the same pixel at the different times, may be used.

Further, in the embodiments described above, a signal which is a difference between the composite signal and the brightness component as the color signal, however, a color-difference signal (Cb, Cr) may be used.

According to the embodiments described above, the video processing device, video processing method, and video processing program listed below are attained.

### Note 1

There is provided a video processing device 1 for eliminating a dot interference from a component signal which is attained by separating a brightness signal and a color signal from a composite signal, said video processing device 1 including:
a dot interference detecting device 4 for detecting the dot interference of a pixel based on a plurality of signals of the same pixel in component signals in different times; and
a dot interference eliminating device 5 for eliminating the dot interference detected by the dot interference detecting device 4.

According to the video processing device 1, the dot interference is detected from the same pixel in different times, namely, the dot interference is detected from time-dependent variation of the same pixel. Therefore, dot interference detection and elimination is not affected by a change of a pixel size.

### Note 2

There is provided a video processing method for eliminating a dot interference from a component signal which is attained by separating a brightness signal and a color signal from a composite signal,
said method including a step of detecting and eliminating a dot interference of a pixel based on a plurality of signals of the same pixel in component signals in different times.

According to the video processing method, the dot interference is detected from the same pixel in different times, namely, the dot interference is detected from time-dependent variation of the same pixel. Therefore, dot interference detection and elimination is not affected by a change of a pixel size.

### Note 3

There is provided a video processing program for operating a computer 100 of a video processing device for eliminating a dot interference from a component signal which is attained by separating a brightness signal and a color signal from a composite signal,
said program including a step S4 for detecting a dot interference of a pixel based on a plurality of signals of the same pixel in component signals in different times; and
a step S5 for eliminating the dot interference detected by the step S4.

According to the video processing program, the dot interference is detected from the same pixel in different times, namely, the dot interference is detected from time-dependent variation of the same pixel. Therefore, dot interference detection and elimination is not affected by a change of a pixel size.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

## Claims

1. A video processing device for eliminating a noise from a component signal which is attained by separating a brightness signal and a color signal from a composite signal, said video processing device comprising:
a noise detecting device for detecting a noise of a pixel based on a plurality of signals of a same pixel in component signals in different times; and
a noise eliminating device for eliminating the noise detected by the noise detecting device.

2. The video processing device as claimed in claim 1, further comprising a delaying device for delaying the component signal for at least one frame,
wherein the noise detecting device detects the noise based on a variation of a same pixel between a direct-inputted component signal and a delayed component signal via the delaying device.

3. The video processing device as claimed in claim 2,
wherein the noise detecting device detects the noise based on the variation of a plurality of component signals at the same pixel delayed for different frames by the delaying device.

4. The video processing device as claimed in claim 1,
wherein the noise detected by the noise detecting device and eliminated by the noise eliminating device is a dot interference or a cross color generated by separating a brightness signal and a color signal from a composite signal.

5. The video processing device as claimed in claim 4,
wherein the noise detecting device detects the dot interference using only the brightness signal of the component signal, and the noise eliminating device eliminates the dot interference.

6. The video processing device as claimed in claim 4,
wherein the noise detecting device detects the cross color using both the brightness signal and the color signal of the component signal, and the noise eliminating device eliminates the cross color.

7. A video processing method for eliminating a noise from a component signal which is attained by separating a brightness signal and a color signal from a composite signal,
said method comprising a step of detecting and eliminating a noise of a pixel based on a plurality of signals of the same pixel in component signals in different times.

8. The video processing method as claimed in claim 7,
further comprising the steps of:
delaying the component signal for at least one frame; and
detecting the noise based on a variation of a same pixel between a direct-inputted component signal and a delayed component signal via the delaying device.

9. A video processing program for operating a computer of a video processing device for eliminating a noise from a component signal which is attained by separating a brightness signal and a color signal from a composite signal,
said program comprising the steps of:
detecting a noise of a pixel based on a plurality of signals of the same pixel in component signals in different times; and
eliminating the noise detected by the noise detecting step.
